# EUROPÄISCHE PATENTSCHRIFT

(11) **EP 0 568 075 B1**
(45) Veröffentlichungstag und Bekanntmachung des Hinweises auf die Patenterteilung: **12.02.1997**
(21) Anmeldenummer: 93106990.0
(22) Anmeldetag: 29.04.1993
(51) Int. Cl.: F16L 37/133

(54) **Steckverbinder für Schlauch- oder Rohrleitungen, insbesondere für Kraftstoffleitungen von Verbrennungsmotoren**
Plug-in connector for hoses or pipe conduits especially for fuel conduits of combustion engines
Raccord à fiche pour tubes flexibles ou conduites de tuyaux, notamment pour conduites de carburant de machines à combustion interne

(30) Priorität: 29.04.1992 DE 4214105
(43) Veröffentlichungstag der Anmeldung: 03.11.1993
(73) Patentinhaber: ARMATURENFABRIK HERMANN VOSS GMBH & CO., D-51688 Wipperfürth (DE)
(72) Erfinder: Goller, Bernd, W-5272 Wipperfürth (DE)
(74) Vertreter: Patentanwälte Dr. Solf & Zapf

(56) Entgegenhaltungen:
- DE-A- 3 904 479
- DE-C- 3 014 066
- GB-A- 2 244 774
- US-A- 1 966 718
- US-A- 2 004 967
- US-A- 2 772 898

## Beschreibung

Die Erfindung betrifft einen Steckverbinder für Schlauch- oder Rohrleitungen, bestehend aus einem Gehäuseabschnitt mit einem daran befindlichen Steckerzapfen, mit einem Anschlußteil für die Schlauchleitung sowie mit einem den Steckerzapfen in einer Bohrung eines Gehäuses sichernden Sicherungselement. Das Sicherungselement besteht dabei aus mindestens zwei am Gehäuseabschnitt einendig befestigten Rastarmen, die sich in einem Abstand zum Gehäuseabschnitt und Steckerzapfen parallel zur Mittel-Längsachse in Richtung des freien Endes des Steckerzapfens erstrecken und an ihren freien Enden Rastnocken aufweisen. Die Rastnocken hintergreifen im eingesteckten Zustand des Steckerzapfens mit Rastvorsprüngen einen Befestigungsrand des Gehäuses, wobei zum Zwecke des Lösens des Steckerzapfens ein U-förmiges Lösewerkzeug vorgesehen ist, welches mit zwei U-Schenkeln zum Spreizen der Rastarme in den Bereich eines zwischen dem Gehäuseabschnitt und den Rastarmen befindlichen Spaltes senkrecht zur Längsachse des Steckerzapfens einführbar ist.

Aus der DE-PS 30 14 066 ist ein Steckverbinder bekannt, der eine Federklammer zur axialen Lagesicherung bei der Verbindung einer Kraftstoffverteilerleitung mit einer Kraftstoffeinspritzdüse aufweist. Hierbei wird ein mit der Kraftstoffverteilerleitung verbundener Steckverbinder in ein Gehäuseteil der Einspritzdüse eingesteckt, und die axiale Lagesicherung erfolgt mit einer radial von der Seite aufgeschobenen U-förmig geformten Federklammer.

Aus der DE-OS 39 04 479 ist ein ähnliches Verbindungselement zum gleichen Zweck bekannt, das als Kunststoffclip ausgebildet ist, der aus einer C-förmigen Ringscheibe mit von dieser in Clipachsrichtung wegstehenden Federstegen mit nach innen weisenden Rastnasen besteht. Dieser Kunststoffclip wird radial von der Seite aufgeschoben, wobei die Ringscheibe mit einem Nuteingreifsbereich in eine Umfangsnut in der Einspritzdüse eingreift, während die Rastnasen nach koaxialem Einschieben des Endes der Einspritzdüse in das Anschlußgehäuse bzw. den Anschlußstutzen hinter einem Befestigungsrand am Anschlußgehäuse einschnappen.

Diese bekannten Verbindungen haben den Nachteil, daß das Einstecken und Sichern der Einstecklage zwei getrennte Vorgänge sind und mittels mindestens zweier separater Teile erfolgt. Hiermit ist aber ein erhöhter Arbeitsaufwand verbunden, und zudem besteht die Gefahr, daß insbesondere das Sicherungselement bei Reparaturarbeiten verlorengeht. Zudem sind zum Lösen der Verbindung Spezialwerkzeuge erforderlich.

Durch die US-A-1 966 718 ist ein Steckverbinder anderer Art offenbart worden, bei dem ein "Lösewerkzeug" Bestandteil eines der beiden zu verbindenden Teile, und zwar eines den Stecker aufnehmenden Muffenteils, ist; wobei es sich um eine bogenförmige Platte handelt, die derart verdrehbar angeordnet ist, daß durch Schlitze geführte Federarme durch Verdrehen der Platte gespreizt oder zusammengedrückt werden.

Bei einem durch die GB-A-2 244 774 bekannten Steckverbinder entsprechend dem Oberbegriff des Anspruchs 1 sind in einer Ausführung Rastarme (Fortsätze) vorgesehen, die an ihren freien Enden mit einem koaxialen Ringkörper verbunden sind. Zum Lösen dieser Verbindung wird ein gabelartiges Werkzeug verwendet, welches zum Spreizen der Fortsätze mit zwei Armen in Spalte zwischen dem Rohrkörper und den Fortsätzen eingesetzt wird. Es handelt sich somit um ein separates Lösewerkzeug, mit dessen Einsatz eine umständliche Handhabung und eine stets vorhandenen Verlustgefahr verbunden sind. In einer anderen Ausführungsform dieses bekannten Steckverbinders sind an den Rastarmen Ansätze gebildet, die sich mit Abstand parallel zum Rohrkörper in zu den Rastarmen entgegengesetzter Richtung erstrecken. Hierdurch können zum Lösen des Steckers die Rastarme durch Zusammendrücken der Ansätze nach Art einer Wippe gespreizt werden. Diese Ausführung ist nicht für alle bei Schlauch- oder Rohrleitungen auftretenden Einbausituationen geeignet, da die Ansätze zum Betätigen auf zwei diametral gegenüberliegenden Seiten zugänglich sein müssen; sie ist hinsichtlich ihrer Anwendbarkeit eingeschränkt.

Der vorliegenden Erfindung liegt die Aufgabe zugrunde, eine Steckverbindung für Schlauch- oder Rohrleitungen, insbesondere für Kraftstoffleitungen von Verbrennungsmotoren, der gattungsgemäßen Art zu schaffen, bei dem das Lösen der Verbindung mittels an der Steckverbindung selbst vorhandener Mittel möglich ist. Die Anwendbarkeit der Steckverbindung soll sich ohne besondere Einschränkungen auf die verschiedenen auftretenden Einbausituationen der Leitungen erstrecken.

Erfindungsgemäß wird dies mit einem Steckverbinder der eingangs beschriebenen Art erreicht, bei dem das Lösewerkzeug als eine im Bereich des Spaltes zwischen den Rastarmen und dem Gehäuseabschnitt unverlierbar gehaltene, den Gehäuseabschnitt mit ihren U-Schenkeln umgreifende Spreizklammer ausgebildet ist. Die Spreizklammer ist zum Spreizen der Rastarme senkrecht zur Längsachse verschiebbar geführt, indem am Umfang des Gehäuseabschnitts den Rastarmen jeweils gegenüberliegend Führungsnuten mit parallel zu den Rastarmen verlaufendem Nutgrund ausgebildet sind und in diesen Führungsnuten die U-Schenkel der Spreizklammer formschlüssig geführt sind.

Erfindungsgemäß stellt die Spreizklammer dabei das Werkzeug dar, mit dem der erfindungsgemäße Steckverbinder aus seiner Einstecklage gelöst werden kann. Dies erfolgt durch Verschieben der in den Führungsnuten gehaltenen Spreizklammer senkrecht zur Längsachse des Steckerzapfens, wobei die Rastarme auseinandergespreizt werden und damit den Befestigungsrand freigeben, so daß der Steckerzapfen aus dem Gehäuse herausgezogen werden kann. Damit ist erfindungsgemäß das Lösewerkzeug Bestandteil des Steckverbinders selbst. Separate Demontagewerkzeuge entfallen.

Da die Rastarme insbesondere durch einen T-förmigen Querschnitt eine relativ hohe Steifigkeit besitzen, ist gewährleistet, daß auch nach mehrmaligem Stecken und Lösen des erfindungsgemäßen Steckverbinders nach wie vor eine hinreichend große Rückstellkraft der Rastarme vorhanden ist, so daß eine sichere Fixierung stets gegeben ist. Zweckmäßigerweise kann der erfindungsgemäße Steckverbinder mit den Rastarmen als einstückiges Kunststoffteil hergestellt sein.

Weitere vorteilhafte Ausführungen der Erfindung sind in den Unteransprüchen enthalten.

Die Erfindung und die speziellen vorteilhaften Ausführungen werden anhand der folgenden Figurenbeschreibung im einzelnen näher erläutert. Es zeigen:
- Fig. 1: eine Seitenansicht eines erfindungsgemäßen Steckverbinders,
- Fig. 2: eine Ansicht gemäß dem Pfeil II in Fig. 1 auf den erfindungsgemäßen Steckverbinder,
- Fig. 3: eine Seitenansicht des Steckverbinders gemäß Fig. 1 gemäß dem Pfeil III, jedoch im eingesteckten Zustand in einem im Schnitt dargestellten Gehäuse,
- Fig. 4: eine Aufsicht auf eine erfindungsgemäße Spreizklammer,
- Fig. 5: eine Ansicht auf den erfindungsgemäßen Steckverbinder gemäß Fig. 1 in Richtung des Pfeils III, jedoch ohne die Spreizklammer gemäß Fig. 4.

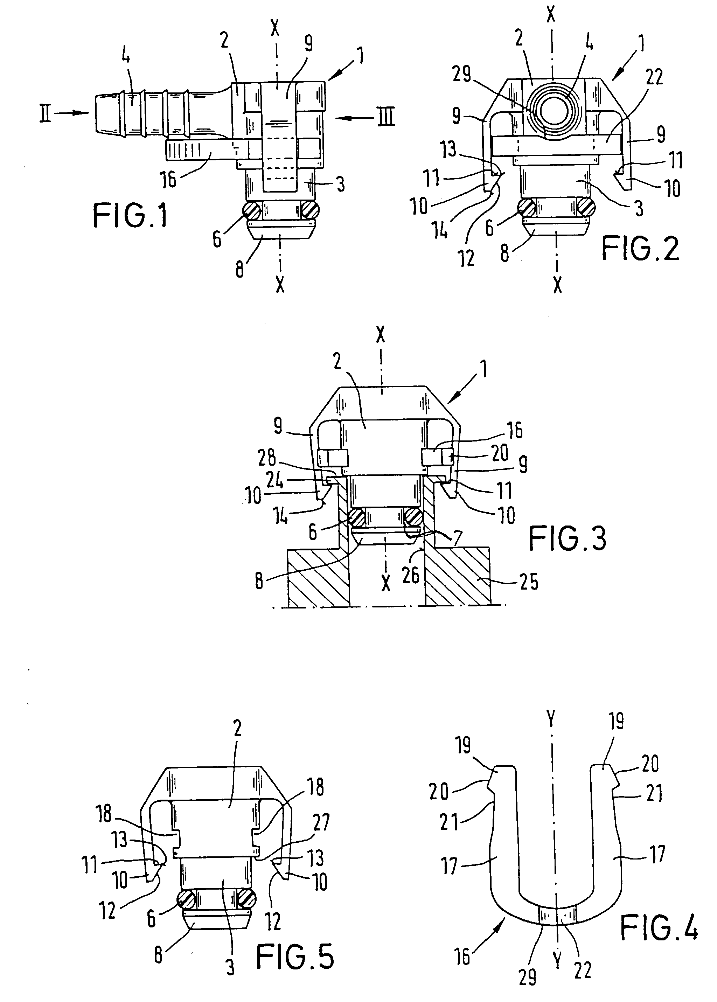

Wie sich aus den Fig. 1 und 3 ergibt, besteht ein erfindungsgemäßer Steckverbinder 1 zum Anschluß von Schlauchleitungen, insbesondere von Kraftstoffleitungen für Verbrennungsmotoren an ein vorzugsweise ortsfestes Anschlußteil, insbesondere eine Einspritzdüse eines Kraftfahrzeugmotors, aus einem Gehäuseabschnitt 2, an dem einseitig ein Steckerzapfen 3 und vorzugsweise in einem rechten Winkel zu dessen Mittel-Längsachse X-X ein Anschlußdorn 4 zum Aufschieben einer Schlauchleitung angeformt ist. Innerhalb des Anschlußdorns 4, des Gehäuseabschnitts 2 und des Steckerzapfens 3 verläuft eine innere durchgehende Bohrung, die ihre Eintrittsöffnung am freien Ende des Anschlußdorns 4 und ihrer Austrittsöffnung am freien Ende des Steckerzapfens 3 besitzt. Auf dem Steckerzapfen 3 ist eine O-Ring-Dichtung 6 in einer Ringnut 7 angeordnet. Der Steckerzapfen 3 weist an seinem freien Ende eine Ringfase 8 auf.

An dem Gehäuseabschnitt 2 sind zwei einander diametral gegenüberliegende Rastarme 9 befestigt, die sich in einem Abstand zum Gehäuseabschnitt 2 und zum Steckerzapfen 3 parallel zu dessen Mittel-Längsachse X-X in Richtung auf sein freies Ende hin erstrecken. Es liegt im Rahmen der Erfindung, auch mehr als zwei Rastarme vorzusehen, diese können dann beispielsweise im Falle von drei Rastarmen zueinander um 120° versetzt sein. Die Länge der Rastarme 9 ist vorzugsweise derart, daß sie kurz vor der O-Ring-Dichtung 6 enden. Die Rastarme 9 weisen an ihren freien Enden Rastnocken 10 auf, die senkrecht zur Längsachse X-X verlaufende, aufeinanderzu gerichtete Rastvorsprünge 11 besitzen. Die einander gegenüberliegenden Nockenflächen 12 verlaufen schräg zur Längsachse X-X derart, daß die Innenkante 13 der Rastvorsprünge einen geringeren Abstand zur Umfangsfläche des Steckerzapfens 3 besitzt als die Innenkante 14 des freien Endes der Rastarme 9. Die Innenkante 13 verläuft kreisbogenförmig parallel zur Umfangsfläche des Steckerzapfens 3. Zwischen den Rastarmen 9 und dem Gehäuseabschnitt 2 ist eine etwa U-förmige Spreizklammer 16, siehe Fig. 4, mit ihren beiden U-Schenkeln 17 verschiebbar geführt. Hierzu sind am Umfang des Gehäuseabschnitts 2 den Rastarmen 9 jeweils gegenüberliegende Führungsnuten 18, siehe Fig. 5, ausgebildet, deren Nutgrund parallel zu den Rastarmen 9 verläuft. In diesen Führungsnuten 18 sind die U-Schenkel 17 formschlüssig geführt. Die U-Schenkel 17 der Spreizkammer 16 weisen an ihren freien Enden Konusabschnitte 19 auf. Der lichte Abstand der U-Schenkel 17 voneinander ist gleich bzw. etwas größer als die Breite des Gehäuseabschnitts 2 im Bereich der Führungsnuten 18. Die Konusabschnitte 19 weisen äußere, derart schräg zur Symmetrieachse Y-Y der Spreizklammer 16 verlaufende Konusflächen 20 auf, daß die Breite der U-Schenkel 17 an ihren freien Enden, d. h. am Anfang der Konusabschnitte 19, geringer ist als am Ende der Konusabschnitte 19. Hierbei ist die Breite der U-Schenkel 17 am Beginn der Konusabschnitte 19 kleiner/gleich dem lichten Abstand der Rastarme 9 vom Nutgrund der Führungsnuten 18, und die Breite der U-Schenkel 17 am Ende der Konusabschnitte 19 ist größer als der lichte Abstand der Rastarme 9 vom Nutgrund der Führungsnuten 18. Durch diese Ausgestaltung kann die Spreizklammer 16 seitlich im Bereich der Führungsnuten 18 auf den Gehäuseabschnitt 2 aufgeschoben werden, wobei beim Aufschieben durch die Konusabschnitte 19 die Rastarme 9 leicht nach außen gebogen werden. Sobald die Konusabschnitte 19 die Rastarme 9 passiert haben, federn diese zurück, und die Spreizklammer 16 ist verliersicher am Gehäuseabschnitt 2 befestigt.

Hinter dem Ende der Konusabschnitte 19 entspricht die Breite der U-Schenkel 17 dem lichten Abstand der Rastarme 9 vom Nutgrund der Führungsnuten 18, und zwar in einem Längenabschnitt 21, der der Breite der Rastarme 9 entspricht. Von den den Konusabschnitten 19 abgekehrten Enden der Längenabschnitte 21 verbreitern sich die U-Schenkel 17 stetig nach außen bis zum Beginn des die U-Schenkel 17 verbindenden Basisschenkels 22 der Spreizklammer 16. Durch diese stetige Verbreiterung erfolgt beim vollständigen Aufschieben der Spreizklammer 16 auf den Gehäuseabschnitt 2 bis etwa zum Anschlag des Basisschenkels 22 an den Gehäuseabschnitt 2 ein Auseinanderspreizen der Rastarme 9 derart, daß der lichte Abstand der Rastvorsprünge 11 größer ist als der Außendurchmesser eines Befestigungsrandes 24 an einem Gehäuse 25, in dessen Gehäusebohrung 26 der Steckerzapfen 3 eingesteckt werden soll, siehe Fig. 3.

Wird nun der Steckerzapfen 3 in die Gehäusebohrung 26 eingesteckt, so werden beim Einstecken aufgrund der Rastnocken 10 die Rastarme 9 auseinandergespreizt. Sobald die Rastnocken 10 eine Lage während des Einsteckens des Stekkerzapfens 3 in die vom Befestigungsrand 24 umgebende Öffnung der Gehäusebohrung 26 des Gehäuses 25 erreicht haben, in der sie mit ihren Rastvorsprüngen 11 den Befestigungsrand 24 hintergreifen, federn die Rastarme 9 zurück und rasten mit den Rastvorsprüngen 11 hinter dem Befestigungsrand 24 ein. In dieser Einstecklage des Steckerzapfens 3 hat dieser seine Endlage erreicht, in der der Gehäuseabschnitt 2 mit seiner Unterseite 27 an der dieser zugekehrten Anlagefläche 28 des Befestigungsrandes 4 anliegt.

Zum Lösen des erfindungsgemäßen Steckverbinders 1 vom Gehäuse 25 wird die Spreizklammer 16 so weit auf den Gehäuseabschnitt 2 aufgeschoben, bis sie mit ihrem Basisschenkel 22 etwa am Gehäuseabschnitt 2 anschlägt. Durch dieses Aufschieben werden die Rastarme 9 mittels der sich stetig verbreiternden U-Schenkel 17 auseinandergespreizt, wie oben beschrieben, so daß der Befestigungsrand 24 von den Rastvorsprüngen 11 freigegeben wird und der Steckerzapfen 3 aus der Gehäusebohrung 26 herausgezogen werden kann. Der Außendurchmesser des Befestigungsrandes 24 ist kleiner als der lichte Abstand der Rastarme 9 und größer als der lichte Abstand der Rastvorsprünge 11.

Der erfindungsgemäße Steckverbinder 1 ist zweckmäßigerweise als einteiliges Kunststoffteil, insbesondere Spritzgußteil, ausgebildet, und die Spreizklammer 16 besteht ebenfalls insbesondere aus Kunststoff.

Der Basisschenkel 22 besitzt im Bereich unterhalb des Anschlußdorns 4, siehe Fig. 2, eine kreisbogenförmige Vertiefung 29. Hierdurch entsteht zwischen dem Anschlußdorn 4 und dem Basisschenkel 22 ein ausreichender Abstand, um die auf den Anschlußdorn 4 aufzuschiebende Schlauchleitung bis zum Anschlag an den Gehäuseabschnitt 2 aufschieben zu können.

Es liegt auch im Rahmen der Erfindung, die Rastarme 9, beispielsweise durch eine Clipverbindung, am Gehäuseabschnitt 2 zu befestigen.

## Patentansprüche

1. Steckverbinder für Schlauch- oder Rohrleitungen, bestehend aus einem Gehäuseabschnitt (2) mit einem daran befindlichen Steckerzapfen (3), mit einem Anschlußteil (4) für die Schlauchleitung sowie mit einem den Stekkerzapfen (3) in einer Bohrung (26) eines Gehäuses (25) sichernden Sicherungselement, wobei das Sicherungselement aus mindestens zwei am Gehäuseabschnitt (2) einendig befestigten Rastarmen (9) besteht, die sich in einem Abstand zum Gehäuseabschnitt (2) und Steckerzapfen (3) parallel zur Mittel-Längsachse (X-X) in Richtung des freien Endes des Steckerzapfens (3) erstrecken und an ihren freien Enden Rastnocken (10) aufweisen, die im eingesteckten Zustand des Steckerzapfens (3) mit Rastvorsprüngen (11) einen Befestigungsrand (24) des Gehäuses (25) hintergreifen, wobei zum Zwecke des Lösens des Steckerzapfens (3) ein U-förmiges Lösewerkzeug vorgesehen ist, welches mit zwei U-Schenkeln (17) zum Spreizen der Rastarme (9) in den Bereich eines zwischen dem Gehäuseabschnitt (2) und den Rastarmen (9) befindlichen Spaltes senkrecht zur Längsachse (X-X) des Steckerzapfens (3) einführbar ist,
**dadurch gekennzeichnet,** daß das Lösewerkzeug als eine im Bereich des Spaltes zwischen den Rastarmen (9) und dem Gehäuseabschnitt (2) unverlierbar gehaltene, den Gehäuseabschnitt (2) mit ihren U-Schenkeln (17) umgreifende Spreizklammer (16) ausgebildet ist, die zum Spreizen der Rastarme (9) senkrecht zur Längsachse (X-X) verschiebbar geführt ist, indem am Umfang des Gehäuseabschnitts (2) den Rastarmen (9) jeweils gegenüberliegend Führungsnuten (18) mit parallel zu den Rastarmen (9) verlaufendem Nutgrund ausgebildet sind und in diesen Führungsnuten (18) die U-Schenkel (17) der Spreizklammer (16) formschlüssig geführt sind.

2. Steckverbinder nach Anspruch 1,
**dadurch gekennzeichnet,** daß die U-Schenkel (17) der Spreizklammer (16) an ihren freien Enden Konusabschnitte (19) aufweisen, die äußere, derart schräg zur Symmetrieachse (Y-Y) der Spreizklammer (16) verlaufende Konusflächen (20) aufweisen, daß die Breite der U-Schenkel (17) an ihren freien Enden, d. h. am Anfang der Konusabschnitte (19), geringer ist als am Ende der Konusabschnitte (19).

3. Steckverbinder nach Anspruch 2,
**dadurch gekennzeichnet,** daß die Breite der U-Schenkel (17) am Beginn der Konusabschnitte (19) kleiner/gleich dem lichten Abstand der Rastarme (9) vom Nutgrund der Führungsnuten (18) und die Breite der U-Schenkel (17) am Ende der Konusabschnitte (19) größer als der lichte Abstand der Rastarme (9) vom Nutgrund der Führungsnuten (18) ist.

4. Steckverbinder nach einem der Ansprüche 1 bis 3,
**dadurch gekennzeichnet,** daß der lichte Abstand der U-Schenkel (17) der Spreizklammer (16) voneinander gleich oder etwas größer ist als die Breite des Gehäuseabschnittes (2) im Führungsbereich der Spreizklammer (16).

5. Steckverbinder nach einem der Ansprüche 2 bis 4,
**dadurch gekennzeichnet,** daß hinter dem Ende der Konusabschnitte (19) der U-Schenkel (17) deren Breite dem lichten Abstand der Rastarme (9) vom Nutgrund der Führungsnuten (18) innerhalb eines Längenabschnitts (21) entspricht, dessen Länge der Breite der Rastarme (9) angepaßt ist.

6. Steckverbinder nach Anspruch 5,
**dadurch gekennzeichnet**, daß von den den Konusabschnitten (19) abgekehrten Enden der Längenabschnitte (21) aus sich die U-Schenkel (17) stetig nach außen bis zum Beginn eines die U-Schenkel verbindenden Basisschenkels (22) verbreitern.

7. Steckverbinder nach Anspruch 6,
**dadurch gekennzeichnet,** daß der Basisschenkel (22) im Bereich unterhalb des Anschlußdorns (4) eine kreisbogenförmige Vertiefung (29) aufweist, so daß der Abstand zwischen dem Basisschenkel (22) und dem Anschlußdorn (4) mindestens der Wanddicke einer aufzuschiebenden Schlauchleitung entspricht.

8. Steckverbinder nach einem der Ansprüche 1 bis 7,
**dadurch gekennzeichnet,** daß die Spreizklammer (16) aus Kunststoff besteht.

9. Steckverbinder nach einem der Ansprüche 1 bis 8,
**dadurch gekennzeichnet,** daß die Rastarme (9) an ihren freien Enden Rastnocken (10) aufweisen, die senkrecht zur Längsachse (X-X) verlaufende, aufeinanderzu gerichtete Rastvorsprünge (11) besitzen.

10. Steckverbinder nach Anspruch 9,
**dadurch gekennzeichnet,** daß die Rastnocken (10) einander gegenüberliegende Nockenflächen (12) besitzen, die schräg zur Längsachse (X-X) derart verlaufen, daß die Rastvorsprünge (11) mit ihrer Innenkante (13) einen geringeren Abstand zur Umfangsfläche des Steckerzapfens (3) besitzen als die Rastarme (9) mit ihrer an ihrem freien Ende ausgebildeten Innenkante (14).

11. Steckverbinder nach Anspruch 10,
**dadurch gekennzeichnet,** daß die Innenkante (13) kreisbogenförmig parallel zur Umfangsfläche des Steckerzapfens (3) verläuft.

12. Steckverbinder nach einem der Ansprüche 1 bis 11,
**dadurch gekennzeichnet,** daß auf dem Steckerzapfen (3) eine O-Ring-Dichtung (6) in einer Ringnut (7) angeordnet ist, und die Länge der Rastarme (9) derart ist, daß sie kurz vor der O-Ring-Dichtung (6) enden.

13. Steckverbinder nach einem der Ansprüche 1 bis 12,
**dadurch gekennzeichnet,** daß der Gehäuseabschnitt (2), der Steckerzapfen (3), der Anschlußdorn (4) sowie die Rastarme (9) ein einstückiges Kunststoffteil bilden.

## Claims

1. A plug-type connector for hose or pipe lines, comprising a housing portion (2) having, located thereon, a plug-type spigot (3), having a connection part (4) for the hose line and having a securing element which secures the plug-type spigot (3) in a bore (26) in a housing (25), the securing element comprising at least two latching arms (9) which are secured at one end to the housing portion (2), extend at a spacing from the housing portion (2) and plug-type spigot (3), parallel to the central longitudinal axis (X-X), in the direction of the free end of the plug-type spigot (3) and have at their free ends latching cams (10) which, in the inserted condition of the plug-type spigot (3), reach by means of latching projections (11) behind a securing rim (24) of the housing (25), there being provided for the purpose of releasing the plug-type spigot (3) a U-shaped release tool which, for the purpose of expanding the latching arms (9), may be introduced perpendicular to the longitudinal axis (X-X) of the plug-type spigot (3) into the region of a gap between the housing portion (2) and the latching arms (9) by means of two limbs (17) of the U, characterized in that the release tool is constructed as an expanding clip (16) which is held non-detachably in the region of the gap between the latching arms (9) and the housing portion (2), surrounds the housing portion (2) with the limbs (17) of its U and is guided displaceably, perpendicular to the longitudinal axis (X-X), to expand the latching arms (9) in that guide grooves (18) are constructed on the periphery of the housing portion (2), in each case opposite the latching arms (9), with the groove base running parallel to the latching arms (9), and the limbs (17) of the U of the expanding clip (16) are guided form-fittingly within these guide grooves (18).

2. A plug-type connector according to Claim 1, characterized in that the limbs (17) of the U of the expanding clip (16) have at their free ends cone portions (19) which have outer cone faces (20) running obliquely with respect to the axis of symmetry (Y-Y) of the expanding clip (16) such that the width of the limbs (17) of the U is smaller at their free ends, that is to say at the start of the cone portions (19), than at the end of the cone portions (19).

3. A plug-type connector according to Claim 2, characterized in that the width of the limbs (17) of the U at the commencement of the cone portions (19) is less than or equal to the clearance between the latching arms (9) and the groove base of the guide grooves (18), and the width of the limbs (17) of the U at the end of the cone portions (19) is greater than the clearance between the latching arms (9) and the groove base of the guide grooves (18).

4. A plug-type connector according to one of Claims 1 to 3, characterized in that the clearance between the limbs (17) of the U of the expanding clip (16) is equal to or somewhat greater than the width of the housing portion (2) in the guide region of the expanding clip (16).

5. A plug-type connector according to one of Claims 2 to 4, characterized in that, after the end of the cone portions (19) of the limbs (17) of the U, the width thereof corresponds to the clearance between the latching arms (9) and the groove base of the guide grooves (18) within a longitudinal portion (21) whereof the length is matched to the width of the latching arms (9).

6. A plug-type connector according to Claim 5, characterized in that, from the ends of the longitudinal portions (21) remote from the cone portions (19), the limbs (17) of the U widen constantly outwards as far as the commencement of a base limb (22) connecting the limbs of the U.

7. A plug-type connector according to Claim 6, characterized in that the base limb (22) has an arcuate depression (29) in the region below the connection spike (4), so that the spacing between the base limb (22) and the connection spike (4) corresponds at least to the wall thickness of a hose line to be pushed on.

8. A plug-type connector according to one of Claims 1 to 7, characterized in that the expanding clip (16) is made of plastics material.

9. A plug-type connector according to one of Claims 1 to 8, characterized in that the latching arms (9) have at their free ends latching cams (10) which possess latching projections (11) running perpendicular to the longitudinal axis (X-X) and pointing towards one another.

10. A plug-type connector according to Claim 9, characterized in that the latching cams (10) possess mutually opposing cam faces (12) which run obliquely with respect to the longitudinal axis (X-X) such that the inside edge (13) of the latching projections (11) is at a smaller spacing from the peripheral face of the plug-type spigot (3) than the inside edge (14) constructed at the free end of the latching arms (9).

11. A plug-type connector according to Claim 10, characterized in that the inside edge (13) runs in an arcuate shape parallel to the peripheral face of the plug-type spigot (3).

12. A plug-type connector according to one of Claims 1 to 11, characterized in that an O-ring seal (6) is arranged in an annular groove (7) on the plug-type spigot (3), and the length of the latching arms (9) is such that they end just before the O-ring seal (6).

13. A plug-type connector according to one of Claims 1 to 12, characterized in that the housing portion (2), the plug-type spigot (3), the connection spike (4) and the latching arms (9) form a plastics part in one piece.

## Revendications

1. Raccord à fiche pour tuyaux flexibles ou tubes, comprenant une section de boîtier (2) contenant une broche d'enfichage (3), un élément (4) de raccordement de la conduite flexible, ainsi qu'un élément de sécurité bloquant la broche (3) dans un alésage (26) d'un boîtier (25), l'élément de sécurité consistant en au moins deux bras d'arrêt (9) attachés par une extrémité à la section de boîtier (2), ces bras s'étendant à une certaine distance par rapport à la section de boîtier (2) et à la broche d'enfichage (3), parallèlement à l'axe longitudinal central (X-X) dans la direction de l'extrémité libre de la broche d'enfichage (3), et présentant à leurs extrémités libres des cames d'arrêt (10) dont des saillies d'arrêt (11) s'insèrent derrière un bord de fixation (24) du boîtier (25) lorsque la broche (3) est enfichée, un outil de desserrage en forme de U étant prévu pour desserrer la broche (3), deux bras de U (17) de cet outil pouvant être introduits pour écarter les bras d'arrêt (9), dans la région d'une fente prévue entre la section de boîtier (2) et les bras d'arrêt (9), perpendiculairement à l'axe longitudinal (X-X) de la broche (3),
caractérisé en ce que l'outil de serrage a la forme d'une pince d'écartement (16) maintenue de manière imperdable dans la région de la fente, entre les bras d'arrêt (9) et la section de boîtier (2), les bras de U (17) de cette pince entourant la section de boîtier (2), cette pince pouvant coulisser perpendiculairement à l'axe longitudinal (X-X) pour écarter les bras d'arrêt (9), des rainures de guidage (18) situées respectivement en regard des bras d'arrêt (9) sur la périphérie de la section de boîtier (2) et dont le fond s'étend parallèlement aux bras d'arrêt (9) étant prévues à cet effet, les bras de U (17) de la pince d'écartement (16) étant guidés de par leur forme dans ces rainures de guidage (18).

2. Raccord à fiche selon la revendication 1,
caractérisé en ce que les bras de U (17) de la pince d'écartement (16) présentent à leurs extrémités libres des section coniques (19) comportant des surfaces extérieures coniques (20) s'étendant obliquement par rapport à l'axe de symétrie (Y-Y) de la pince d'écartement (16) de manière à ce que la largeur des bras de U (17) à leur extrémité libre, c'est-à-dire au début des sections coniques (19), soit plus faible qu'à la fin des sections coniques (19).

3. Raccord à fiche selon la revendication 2,
caractérisé en ce que la largeur des bras de U (17) au début des sections coniques (19) est inférieure/égale à l'écartement des bras d'arrêt (9) du fond des rainures de guidage (18), et que la largeur des bras de U (17) à la fin des sections coniques (19) est supérieure à l'écartement des bras d'arrêt (9) du fond des rainures de guidage (18).

4. Raccord à fiche selon l'une des revendications 1 à 3,
caractérisé en ce que l'écartement entre eux des bras de U (17) de la pince d'écartement (16) est égal ou légèrement supérieur à la largeur de la section de boîtier (2) dans la région de guidage de la pince d'écartement (16).

5. Raccord à fiche selon l'une des revendications 2 à 4,
caractérisé en ce que, après la fin des sections coniques (19) des bras de U (17), la largeur de ces derniers correspond à l'écartement des bras d'arrêt (9) du fond des rainures de guidage (18), à l'intérieur d'une portion longitudinale (21) dont la longueur est adaptée à la largeur des bras d'arrêt (9).

6. Raccord à fiche selon la revendication 5,
caractérisé en ce que, à partir des extrémités des portions longitudinales (21) opposées aux sections coniques (19), les bras de U (17) s'élargissent continuellement vers l'extérieur jusqu'au début d'une base (22) qui relie les bras de U.

7. Raccord à fiche selon la revendication 6,
caractérisé en ce que la base (22) présente dans la région située en dessous du goujon de raccordement (4) un évidement en arc de cercle (29), l'écartement entre la base (22) et le goujon de raccordement (4) correspondant de ce fait au moins à l'épaisseur de la paroi du tuyau flexible à emboîter.

8. Raccord à fiche selon l'une des revendications 1 à 7,
caractérisé en ce que la pince d'écartement (16) est réalisée en une matière synthétique.

9. Raccord à fiche selon l'une des revendications 1 à 8,
caractérisé en ce que les bras d'arrêt (9) présentent à leurs extrémités libres des cames d'arrêt (10) présentant des saillies d'arrêt (11) qui s'étendent perpendiculairement à l'axe longitudinal (X-X) et sont orientées l'une vers l'autre.

10. Raccord à fiche selon la revendication 9,
caractérisé en ce que les cames d'arrêt (10) présentent des surfaces de came (12) en regard qui s'étendent obliquement par rapport à l'axe longitudinal (X-X) de manière à ce que le bord intérieur (13) des saillies d'arrêt (11) soit séparé de la surface périphérique de la broche d'enfichage (3) d'une distance plus faible que le bord intérieur (14) prévu à l'extrémité libre des bras d'arrêt (9).

11. Racord à fiche selon la revendication 10,
caractérisé en ce que le bord intérieur (13) s'étend en arc de cercle parallèlement à la surface périphérique de la broche d'enfichage (3).

12. Raccord à fiche selon l'une des revendications 1 à 11,
caractérisé en ce qu'un joint torique (6) est disposé sur la broche d'enfichage (3) dans une rainure annulaire (7), et que la longueur des bras d'arrêt (9) est telle qu'ils se terminent à faible distance du joint torique (6).

13. Raccord à fiche selon l'une des revendications 1 à 12,
caractérisé en ce que la section de boîtier (2) des broches d'enfichage (3), le goujon de raccordement (4), ainsi que les bras d'arrêt (9) forment un élément d'une seule pièce en une matière synthétique.
